# EUROPEAN PATENT APPLICATION

(11) **EP 3 560 684 A1**
(43) Date of publication of application: **30.10.2019**
(21) Application number: 19170942.7
(22) Date of filing: 24.04.2019
(51) Int. Cl.: B29C 64/118, B29C 64/40, B33Y 10/00, B33Y 50/02, B29C 64/393

(54) **METHOD FOR FABRICATING SUPPORT STRUCTURE FOR 3D PRINTING MODEL**

(30) Priority: 25.04.2018 PL 42536218
(71) Applicant: 3D Gence Spólka Z Ograniczona Odpowiedzialnoscia, 40-085 Katowice (PL)
(72) Inventor: Kostrzewa, Szymon, 05-622 Belsk Du y (PL); Wilk, Krzysztof, 41-400 Mys owice (PL)
(74) Representative: AOMB Polska Sp. z.o.o.

(57) **Abstract**

The invention relates to a method for fabricating a support structure for a 3D printed model, wherein a print bed unevenness matrix is created, characterised in that based on the unevenness matrix a base structure with a variable height is constructed, wherein the variable height of the base structure (6) and flattening of its surface is achieved by changing the volume flow of the material through the print nozzle (1).

## Description

The invention relates to a method for fabricating a support structure for a 3D model printed in the fused deposition filament fabrication. In the fused filament fabrication technology, the print in a 3D printer is made on a print bed within the working area. The print bed should be as flat as possible and arranged parallel to the plane in which the print nozzle depositing subsequent layers of material is moving.

The print bed has the task of ensuring that the printed model adheres to the print bed surface during the material deposition process and allowing the model to be separated from the surface after the material deposition process is completed. For technological reasons, in order for the material deposition process to take place correctly, it is required that the distance between the print nozzle and the print bed surface is as constant as possible. The print beds in the 3D printers are made of ceramics, glass, metals, plastics, laminates and other materials, all of which have imperfections and deviations of flatness, and under influence of elevated temperature, a factor being advantageous for the material deposition process, undergo deformation.

The deformation is the greater the larger is the print bed surface of a printer. Due to the deformation, the proper and constant distance of the print bed to the plane in which the print nozzle moves is not achieved. Correcting this non-constant distance by manually calibrating the parallelism of the print bed surface is not effective. It results in defects in the print, detachment of the model from the print bed during the material deposition process and often leads to collision of the model and the print bed with the print nozzle and a permanent damage to the printer.

US20130307193 discloses a method for making a support structure in which several material layers are deposited on the print bed to form a base structure which levels out irregularities of the print bed surface. In this solution, the base structure layers are not consistent which often leads to deformation of the first layer of the model.

PL226599 discloses a method in which the first layer of a multi-section base structure is deposited with a greater path width than the paths of subsequent layers of the base structure. In this method, subsequent layers of the base structure are used to level out the print bed surface. A disadvantage of the method is that it is effective only in the case of relatively small irregularities, not greater than one layer of the model. Increasing the volume flow for constructing wider paths in places where the distance of the print nozzle from the print bed surface is smaller than the layer height increases the extrusion resistance which may lead to incorrect operation of the material feeding system and uncontrolled interruption of material deposition as well as clogging of the print nozzle.

PL224626 discloses a method in which irregularities of the working plane are measured at different spots. A disadvantage of this method is that most irregularities of the print bed surface, which is a uniform plane, are not accounted for. The method is not effective when the working plane is bulged due to operation at elevated temperature, advantageous from the point of view of the 3D printing process.

The known 3DGence ONE printer uses a sensor to examine the print bed for surface irregularities so that the distance between the print bed surface and the print head is measured at different points in a horizontal plane. As a result of these measurements, a print bed unevenness matrix is created and taken into account during printing by moving the print bed along the vertical axis of the printer to compensate for the surface irregularities of the print bed. A disadvantage of this method is that it transfers the irregularities of the print table to the entire print which results in reduction of the dimensional tolerance of the printed model.

In the known Renkforce RF 1000 printer, the print bed unevenness matrix is smoothed on subsequent layers of the printed model. In this method, the vertical movement of the print bed is gradually reduced at each subsequent layer of the printed model. This method allows the dimensional tolerance of the model to be maintained, but its disadvantage is the variable height of subsequent layers of the model, which results in unequal cohesion between the material layers, adversely affecting the mechanical strength of the model. In addition, this method does not work correctly when printing a model with layers lower than the unevenness of the working surface.

In the method according to the invention, first a print bed unevenness matrix is created under the same conditions in which the printing takes place. Then, a spatial multi-section base structure is built for the 3D printed model, wherein the first section of the structure is deposited parallel to the plane in which the print nozzle is operated in at least one layer.

The printing material flow during the nozzle movement is the greater, the larger the measured local distance between the print nozzle and the print bed surface. In the method according to the invention, the material path is the higher (has the larger the cross-sectional area) the larger the measured local distance between the nozzle and the print bed surface. The material flow change is repeated for all layers of the first section. Directly after that, a second section is deposited on the first section to level out and smooth the base structure to allow proper adhesion and separation of the model.

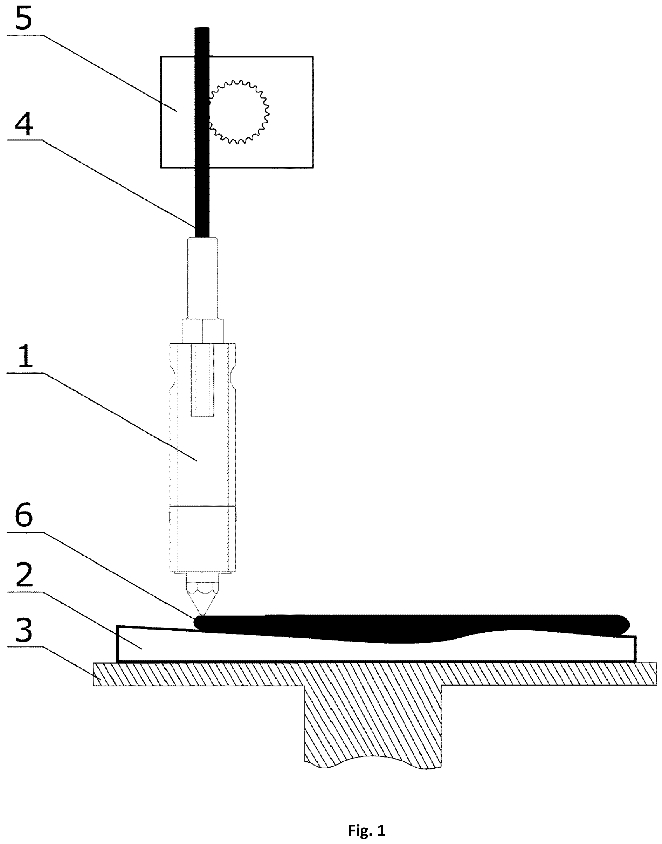

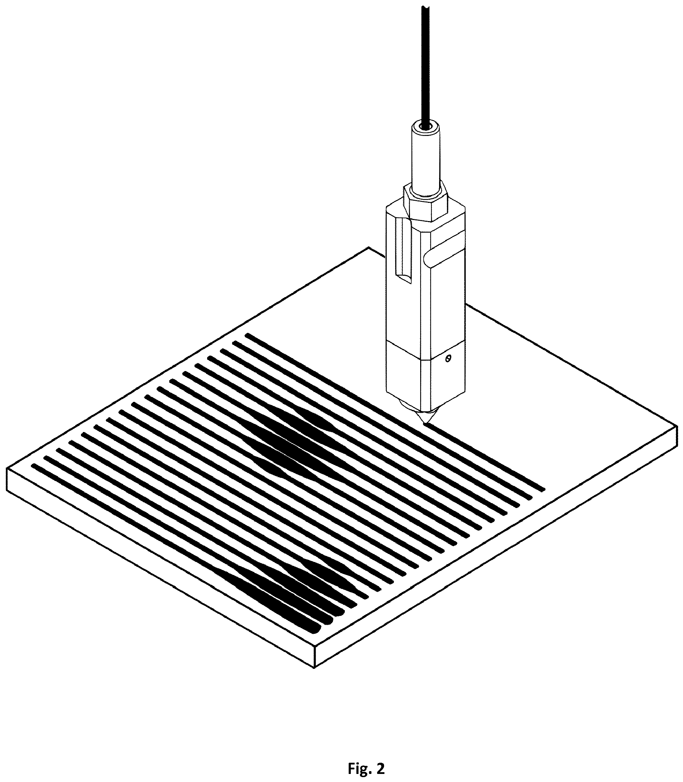

The method according to the invention is illustrated in the embodiment in the drawing, wherein Fig. 1 shows, in a side view, the application of one of the first layer paths of the base structure onto the print bed, and Fig. 2 shows the application of the first layer of the base structure onto the print bed by the head in an oblique view.

The printing nozzle 1 attached to the drive system of the 3D printer is placed above the surface of the print bed 2 linked to the printer frame 3. The printing material 4 moves through the material feeding system 5 to the printing nozzle 1 and is laid down onto the surface of the print bed 2, forming the first layer of the base structure 6. The material forming the base structure 6 is applied the thicker (i.e., with the larger cross-sectional area of the path) the greater the distance of the print nozzle 1 from the surface of the print bed 2. The variable height of the base structure 6 is achieved by changing the volume flow of the printing material 4 through the nozzle 1 by adjusting the rate of operation of the feed system 5 of printing material 4.

The method according to the invention neutralises both the non-parallelism of the print bed to the plane in which the printing nozzle moves as well as the defects and deformations of the print bed. The distance between the working surface and the nozzle can be a multiple of the height of one layer of the printed model. The levelling of the working surface with the method according to the invention can be combined with known methods of working surface levelling, whereby it is also applicable for large working areas with print beds with area larger than one square meter.

## Claims

1. A method for fabricating a support structure for a 3D printed model, wherein a print bed unevenness matrix is created, **characterised in that** based on the unevenness matrix a base structure with a variable height is constructed, wherein the variable height of the base structure (6) and flattening of its surface is achieved by changing the volume flow of the material through the print nozzle (1).

2. The method according to claim 1, **characterised in that** the volume flow is changed depending on the local distance of the print nozzle (1) from the print bed surface (3).

3. The method according to claim 2, **characterised in that** the change of the volume flow of the material through the print nozzle is carried out so that the material path has the larger the cross-sectional area, the greater the measured local distance between the nozzle and the print bed surface.

4. The method according to claim 1 or 2 or 3, **characterised in that** the flow change is carried out in at least one layer of the base structure, preferably in maximum fifteen layers of the base structure (6) laid down as the first ones on the print bed plane (3).
